# FASCICULE DE BREVET EUROPEEN

(11) **EP 1 287 668 B1**
(45) Date de publication et mention de la délivrance du brevet: **07.02.2007**
(21) Numéro de dépôt: 01940695.8
(22) Date de dépôt: 06.06.2001
(51) Int. Cl.: H04M 3/42, H04M 3/493, H04M 3/436, G10L 15/22

(54) **PROCEDE ET DISPOSITIF DE GESTION DE MISE EN RELATION SANS DIVULGATION DE NUMERO DE TELEPHONE**
VERFAHREN UND VORRICHTUNG ZUM HERSTELLEN VON VERBINDUNGEN OHNE VERBREITUNG DER RUFNUMMER
METHOD AND DEVICE FOR CONNECTION WITHOUT TELEPHONE NUMBER DISCLOSURE

(30) Priorité: 09.06.2000 FR 0007471
(43) Date de publication de la demande: 05.03.2003
(73) Titulaire: FRANCE TELECOM, 75015 Paris (FR)
(72) Inventeur: GUILLOT, Yvon, F-22500 Trebeurden (FR); FLAMANT, Eric, F-14000 Caen (FR)
(74) Mandataire: Maillet, Alain
(86) Numéro de dépôt international: PCT/FR2001/001743
(87) Numéro de publication internationale: WO 2001/095600

(56) Documents cités:
- EP-A- 0 840 488
- US-A- 4 320 256
- US-A- 5 058 152
- US-A- 5 774 860
- US-A- 5 822 727
- US-A- 6 035 275

## Description

La présente invention concerne un procédé et un dispositif de gestion de mise en relation sans divulgation de numéro de téléphone. Plus particulièrement, elle vise à permettre à une personne de contacter une autre personne sans connaître son numéro de téléphone et sans passer par un intermédiaire humain, et sans forcément diffuser son propre numéro de téléphone.

Une personne peut souhaiter pouvoir être contactée par une personne ne connaissant pas son numéro de téléphone dans de nombreux cas. Il peut s'agir tout d'abord du cas où elle ne souhaite pas divulguer ses coordonnées téléphoniques pour des raisons de confidentialité. C'est par exemple le cas lorsqu'une personne publie une annonce dans laquelle elle ne veut pas faire figurer son numéro de téléphone. Il peut également s'agir du cas où une information autre que le numéro de téléphone est plus facilement accessible que ce dernier. Par exemple, un automobiliste ou un plaisancier souhaite pouvoir être appelé par d'autres automobilistes ou plaisanciers roulant ou naviguant à proximité. Une information comme le numéro de plaque minéralogique ou le numéro de voile est alors facile d'accès. Il peut également s'agir du cas où une personne souhaite pouvoir être contactée dans des conditions différentes que celles qu'entraîne la divulgation du numéro de téléphone. C'est par exemple le cas lorsqu'une personne ne souhaite pouvoir être jointe que sur une période de temps donnée. C'est également le cas lorsqu'un abonné a changé de numéro de téléphone, par exemple du fait d'un déménagement, et souhaite pouvoir être joint à l'aide de son ancien numéro de téléphone. Enfin, il peut s'agir du cas où une personne assume en alternance avec d'autres personnes une activité pour laquelle elle doit être contactée. C'est par exemple le cas lorsque doit être contactée une association organisatrice d'une manifestation dont plusieurs personnes assument à tour de rôle les tâches administratives.

La présente invention vise notamment un procédé de gestion de mise en relation sans divulgation du numéro de téléphone permettant de satisfaire à l'ensemble de ces besoins de manière souple et ne réclamant pas l'intervention d'un intermédiaire humain.

On connaît, notamment par le document US-A-5 058 152, un tel procédé de mise en relation sans divulgation du numéro de téléphone. Ce procédé comprend, dans un premier stade préalable, une étape d'enregistrement, par ledit appelé, auprès du service central du réseau de communication public, lequel gère les différentes commutations dans le réseau, d'une référence associée à au moins un numéro de téléphone auquel ledit appelé peut être appelé. Cette référence est en réalité un véritable numéro de téléphone géré par le service central de gestion du réseau qui agit, à l'égard de ce numéro, comme un système de transfert d'appel. Dans un second stade, le procédé qui est décrit dans ce document comprend une étape où ledit appelant effectue, en tant que numéro de téléphone, la référence enregistrée et le service central de gestion traduit cette référence dans le numéro de téléphone de l'appelé.

Le procédé qui est décrit dans ce document n'est pas souple dans la mesure où c'est le service central de gestion du réseau qui construit la référence, laquelle est nécessairement un numéro sensiblement équivalent à un numéro de téléphone. Par ailleurs, dans la mesure où le procédé est mis en oeuvre par le service central de gestion du réseau, il n'agit que sur le plan de commutation. Il est donc incapable de proposer des services aussi bien à l'appelé, au moment de la phase d'enregistrement de sa référence, qu'à l'appelant.

Le but de la présente invention est de proposer un procédé de mise en relation sans divulgation du numéro de téléphone qui ne présente pas ces inconvénients et qui soit souple tout en permettant de proposer des services variés aussi bien à l'appelé qu'à l'appelant.

A cet effet, l'invention propose un procédé de gestion de mise en relation d'un appelé auquel est associé au moins un numéro de téléphone avec un appelant qui ne connaît pas ledit numéro de téléphone. Ce procédé est caractérisé en ce qu'il comprend, dans un premier stade préalable, une étape d'enregistrement, auprès d'un serveur accessible au moins par le réseau de communication public dudit numéro de téléphone et par ledit appelé, d'une référence associée, au sein dudit serveur, à au moins un numéro de téléphone auquel ledit appelé peut être appelé, ladite référence étant imposée audit serveur par ledit appelé ainsi qu'une étape de diffusion de ladite référence sur un support d'information accessible au public, et, dans un second stade, une étape d'accès par ledit appelant audit serveur auquel ledit appelant donne ladite référence, puis une étape de mise en relation par ledit serveur dudit appelant et dudit appelé.

Le serveur est par exemple un serveur de télématique vocal tel que celui qui est connu sous le nom de serveur Audiotel de France Télécom. Un tel serveur présente l'avantage d'être accessible par l'intermédiaire du réseau téléphonique public. En outre, ce serveur comprend un moyen d'interface adapté à interpréter des commandes DTMF générées par la manipulation des touches d'un clavier téléphonique et/ou des commandes vocales. Ainsi l'appelé, dans le premier stade d'inscription au service de télématique vocale et l'appelant, dans le second stade d'établissement de la relation, peuvent, à l'aide de leurs combinés téléphoniques respectifs, commander le serveur de manière à ce qu'il effectue les traitements nécessaires respectivement à l'inscription et à la mise en relation. L'appelant et l'appelé n'ont pas besoin de posséder un moyen de connexion ou une interface d'accès spécifique autre que leurs combinés téléphoniques respectifs. Les opérations devant être exécutées par l'appelant ne seront pas d'un ordre de complexité supérieur que s'il appelait directement l'appelé en utilisant son numéro de téléphone. Le serveur indique aux utilisateurs à l'aide de messages audio les actions qu'ils ont à effectuer, de sorte que l'utilisation du service est très simple. La gestion du serveur est entièrement automatisée de sorte qu'il n'y a pas besoin de faire intervenir aucun intermédiaire humain tant au stade de l'inscription qu'au stade de l'établissement de la relation.

Une personne qui ne souhaite pas divulguer ses coordonnées téléphoniques pour des raisons de confidentialité, par exemple une personne qui publie une annonce dans laquelle elle ne veut pas faire figurer son numéro de téléphone, pourra simplement faire figurer dans son annonce la référence qui est associée à son numéro de téléphone.

On notera que la référence est imposée au serveur par l'appelé. Ainsi, par exemple, un automobiliste ou un plaisancier pourra imposer comme référence son numéro respectivement de plaque minéralogique et de voile. Une personne qui est contrainte à de fréquents déménagements pourra imposer comme référence son ancien numéro de téléphone, de manière à ne pas avoir à transmettre de nouvelles coordonnées aux personnes qui connaissaient cet ancien numéro de téléphone.

Avantageusement, une même référence pourra être associée à plusieurs numéros de téléphone, le serveur mettant en relation un appelant ayant accédé audit serveur en se fondant sur ladite référence avec un appelé auquel est associé un desdits numéros de téléphone en fonction d'un paramètre extérieur. Ce paramètre extérieur pourra être, par exemple, un paramètre de temps. Dans le cas où une personne souhaite être appelée par le biais de différents numéros de téléphone selon, par exemple, les moments de la journée, elle n'aura qu'à diffuser une référence et le serveur aiguillera tout appelant se fondant sur cette référence vers l'installation de télécommunication appropriée. Dans le cas où plusieurs personnes assument en alternance une activité pour laquelle elles doivent être contactées, par exemple lorsque plusieurs personnes assument à tour de rôle les tâches administratives d'une association organisatrice d'une manifestation, une référence pourra apparaître sur l'affiche annonçant la manifestation et le serveur aiguillera tout appelant se fondant sur cette référence vers la personne d'astreinte au moment de l'appel.

Avantageusement, le procédé comprend également, avant l'étape de mise en relation, une étape d'identification d'appel au cours de laquelle le serveur transmet à l'appelé des informations sur un appelant ayant accédé audit serveur en se fondant sur ladite référence et une étape d'autorisation au cours de laquelle l'appelé autorise ou non le serveur à effectuer l'étape de mise en relation. Par exemple, le serveur pourra transmettre à l'appelé le numéro de téléphone de l'appelant, le nom de l'appelant et d'autres informations préenregistrées et associées au sein du serveur au numéro de téléphone de l'appelant, voire un mini-message audio de l'appelant enregistré à la requête du serveur.

En parallèle aux étapes d'identification d'appel et d'autorisation ou à la place de ces étapes, le procédé peut également comprendre, avant l'étape de mise en relation, une étape de filtrage d'appels au cours de laquelle le serveur obtient des informations sur un appelant ayant accédé audit serveur en se fondant sur la référence et autorise ou non l'exécution de l'étape de mise en relation téléphonique en fonction de ces informations et de paramètres préalablement fixés par l'appelé. Les paramètres en question peuvent être des paramètres directement liés à l'appelant. Par exemple, l'appelé peut préconstituer une liste noire de numéros de téléphone qui seront automatiquement rejetés par le serveur ou bien une liste blanche de numéros de téléphone qui donnent lieu à une mise en relation automatique. Il peut s'agir également de paramètres liés à la provenance géographique de l'appel ou bien au moment de la journée pendant lequel l'appel est émis. Si l'appel ne provient pas d'une installation de télécommunication dont le numéro a été préalablement mis en liste noire ou bien si l'appel est émis à un certain moment de la journée préalablement choisi par l'appelé ou bien si l'appel provient d'une zone géographique préalablement sélectionnée par l'appelé, le serveur exécutera l'étape de mise en relation téléphonique. Dans le cas contraire, le serveur signifiera à l'appelant par message audio que son appel ne peut aboutir.

Avantageusement, le procédé pourra également comprendre une étape d'enregistrement de messages audio au cours de laquelle l'appelant peut enregistrer un message audio qui sera ultérieurement transmis par le serveur à l'appelé. Ainsi, lorsque la mise en relation ne peut être exécutée, par exemple lorsque l'appelé est absent ou bien lorsqu'il est déjà en communication, l'appelant pourra laisser un message à l'appelé.

Le serveur pourra également, à l'aide de messages audio, demander à l'appelant un certain nombre d'informations permettant d'établir si une mise en relation téléphonique doit être effectuée, si un message audio de l'appelant doit être enregistré ou si l'appel doit être rejeté. Autrement dit, l'appelé peut préétablir un questionnaire interactif permettant d'éliminer automatiquement des appels n'ayant pas de rapport avec ce pour quoi l'appelé désire être contacté.

Avantageusement, le procédé comprend également une étape d'enregistrement d'un message audio par ledit appelé, ledit message étant destiné à être diffusé ultérieurement par ledit serveur audit appelant avant l'étape de mise en relation.

L'étape de mise en relation peut être quelconque. Elle consiste avantageusement à mettre ledit appelant en relation téléphonique avec l'appelé en se fondant sur ledit ou un numéro de téléphone qui est associé à ladite référence. Elle peut également consister à permettre à l'appelant d'enregistrer une télécopie qui sera transmise par ledit serveur audit appelé en se fondant sur ledit ou un numéro de téléphone qui est associé à ladite référence. Elle peut encore consister à permettre à l'appelant d'enregistrer un message audio qui sera transmis par ledit serveur audit appelé en se fondant sur ledit ou un numéro de téléphone qui est associé à ladite référence.

Avantageusement, elle consiste à émettre un message pour laisser le choix audit appelant entre la mise en relation téléphonique avec l'appelé, l'enregistrement d'une télécopie qui sera ultérieurement transmise par ledit serveur audit appelé et l'enregistrement d'un message audio qui sera transmis par ledit serveur audit appelé.

La référence peut être une référence numérique ou alphanumérique transmise de l'appelé au serveur par exemple par des signaux dits DTMF. Il pourrait également s'agir d'une référence vocale associée ou non à une référence numérique ou alphanumérique. Dans ce cas, dans le premier stade préalable, ledit appelé enregistre ladite référence vocale associée ou non à ladite référence numérique ou alphanumérique, ladite référence vocale est ensuite traitée pour, d'une part, modifier le modèle de reconnaissance de parole dudit serveur et pour, d'autre part, enregistrer, en relation avec le ou les numéros de téléphone auxquels peut être joint l'appelé, une étiquette résultat de la reconnaissance de ladite référence vocale par le modèle de reconnaissance de parole dudit serveur, et dans le second stade, la référence vocale que l'appelant a prononcée après avoir accédé au serveur est traitée au moyen du modèle de reconnaissance de parole dudit serveur pour y être reconnue d'où il résulte une étiquette à laquelle le serveur fait correspondre le ou les numéros de téléphone associés pour la mise en relation de l'appelant et de l'appelé.

Dans un mode de réalisation, la référence vocale prononcée par l'appelé est décomposée en une suite de phonèmes et est recomposée, par synthèse vocale, en signaux sonores qui sont alors diffusés à l'appelé pour validation de ladite décomposition. De même, la suite de phonèmes qui a été validée par l'appelé est comparée aux suites de phonèmes stockées dans une base de données dudit serveur pour vérifier que la suite de phonèmes validée est assez différente des suites existantes.

Le modèle de reconnaissance de parole que stocke ledit serveur est modifié pour incorporer l'élément de modèle qui résulte de la suite de phonèmes validée par l'appelé.

Le serveur effectue un contrôle de sa capacité à reconnaître, au moyen de son modèle de reconnaissance de parole, la référence vocale que l'appelé a prononcée et que le serveur avait enregistrée, et, après diffusion et validation par l'appelé, d'une part, modifie définitivement son modèle de reconnaissance de parole et, d'autre part, enregistre une étiquette associée de façon univoque par le serveur à la suite de phonèmes correspondant à ladite référence vocale. Ladite opération de diffusion et validation est par exemple précédée de la diffusion d'un message audio ou annonce d'accueil destinée aux appelants avant l'attente de la référence vocale.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une représentation schématique montrant les sollicitations d'un dispositif de gestion de mise en relation téléphonique exercées par les différentes étapes d'un procédé de gestion selon l'invention;
la Fig. 2 est un organigramme représentant un premier stade d'inscription d'un procédé de gestion selon l'invention ;
la Fig. 3 est un organigramme représentant un second stade de mise en relation d'un procédé de gestion selon l'invention ; et
la Fig. 4 est un organigramme représentant l'opération d'enregistrement d'une référence vocale.

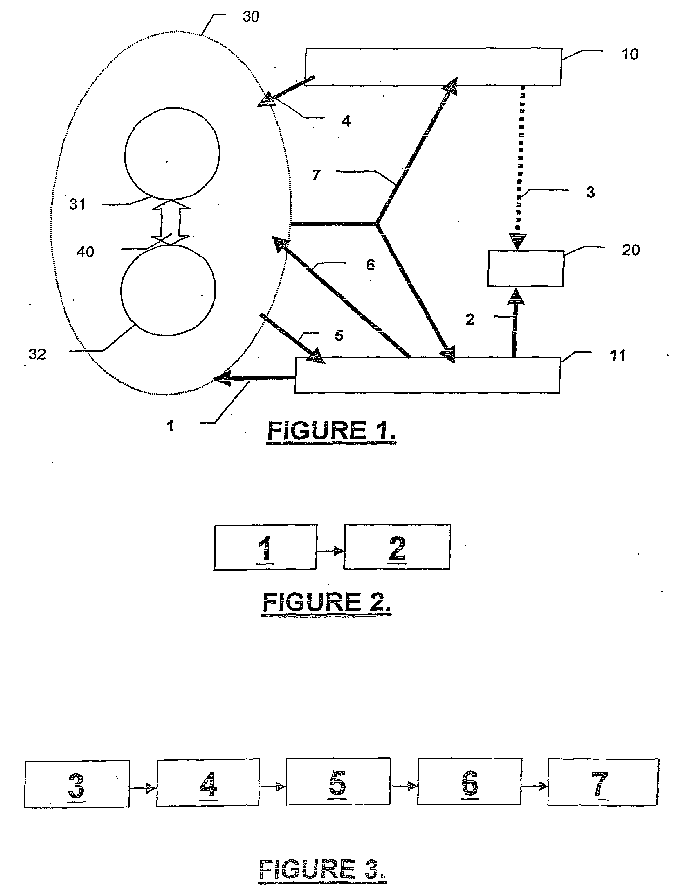

En référence à la Fig. 1, un procédé de gestion permet d'établir une relation, par exemple et pas nécessairement téléphonique comme on le verra par la suite, entre un appelé 11 auquel est associé au moins un numéro de téléphone et un appelant 10 qui ne connaît pas ce ou ces numéros de téléphone. L'appelé 11 et l'appelant 10 sollicitent chacun à leur tour un dispositif de gestion de mise en relation téléphonique comprenant un serveur 30.

Le serveur 30 est, dans un exemple de réalisation, un serveur télématique vocal comme connu sous le nom de "serveur Audiotel" de France Télécom. Ainsi qu'il est bien connu, un tel serveur est accessible par l'intermédiaire du réseau téléphonique public. Ce serveur comprend un moyen d'interface adapté à interpréter des commandes DTMF générées par la manipulation des touches d'un clavier téléphonique et/ou des commandes vocales. Ainsi, l'appelé comme l'appelant peuvent, à l'aide de leurs combinés téléphoniques respectifs, commander le serveur 30 de manière à ce qu'il effectue les traitements nécessaires à l'exécution du procédé ainsi qu'il sera décrit par la suite. Le serveur 30 indique aux utilisateurs à l'aide de messages audio les opérations qu'ils ont à effectuer. La gestion du serveur est entièrement automatisée. Le serveur 30 est adapté à emmagasiner, dans une première table 31 de base de données relationnelle, des numéros de téléphone qu'il peut utiliser pour effectuer une mise en relation téléphonique et, dans une seconde table 32 de base de données relationnelle, des références qui sont fixées par l'appelé 11 dans un premier stade d'inscription qui sera décrit par la suite. Le serveur est adapté à établir des liens 40 entre chaque référence et un ou plusieurs numéros de téléphone correspondants, selon les instructions de l'appelé 11. Lorsque plusieurs numéros de téléphone sont associés à une même référence, les différents liens entre cette référence et ces numéros sont conditionnels, c'est-à-dire que le serveur 30 associe tel ou tel numéro de téléphone à la référence selon qu'un paramètre correspondant à une instruction préalablement fixée par l'appelé 11a telle ou telle valeur. Le serveur 30 est adapté à déterminer automatiquement certains paramètres comme le numéro de téléphone de l'appelant ou l'instant où l'appel est effectué. Il est également adapté à demander à l'appelant 10 par le biais de messages audio des informations lui permettant de déterminer d'autres paramètres permettant d'établir si des conditions préétablies par l'appelé sont ou non remplies.

Des échanges d'informations et des mises en relation entre l'appelant 10, l'appelé 11 et le serveur 30 qu'entraînent les étapes 1 à 7 représentées sur les Figs. 2 et 3 sont symbolisées par des flèches désignées par des références correspondantes sur la Fig. 1. Les flèches en trait plein désignent une transmission d'informations ou une mise en relation. La flèche en traits interrompus désigne une consultation d'information publiée.

Dans une étape d'enregistrement 1 d'un premier stade d'inscription d'un procédé de gestion selon l'invention représenté sur la Fig. 2, l'appelé 11 entre en contact téléphonique avec le serveur 30. Guidé dans cette phase d'inscription par des messages audio émis par le serveur, il entre par le biais de commandes vocales ou DTMF le ou les numéros d'installations de télécommunication sur laquelle ou lesquelles il veut être joint. Le serveur 30 emmagasine ce ou ces numéros dans la table 31. L'appelé 11 indique ensuite la référence qu'il veut diffuser pour être joint. Le serveur 30 établit automatiquement un lien 40 entre la référence et le ou les numéros de téléphone. S'il y a plusieurs numéros de téléphone, le serveur 30 établit des liens conditionnels. Il demande pour cela à l'appelé 11, à l'aide de messages audio, les informations nécessaires à l'établissement de ces liens. Par exemple, il demande à l'appelé 11 d'entrer par le biais de commandes vocales ou DTMF les instants de la journée qui correspondent à chacun des numéros. Eventuellement, le serveur 30 demande également à l'appelé d'entrer d'autres informations de gestion. Notamment, il demande d'entrer les informations permettant d'établir les éventuels critères de filtrage que l'appelé veut mettre en place. Eventuellement, l'appelé entre également un code personnel pour se réserver l'accès au réglage des paramètres du service.

Dans une étape 2 de diffusion de la référence du premier stade d'inscription représenté sur la Fig. 2, l'appelé 11 diffuse la référence par l'intermédiaire d'un support d'information 20. Il peut s'agir d'une affichette servant de support à une petite annonce, ou bien d'un magasine spécialisé dans la diffusion des petites annonces ou tout autre support permettant de diffuser une annonce. Le support d'information 20 peut être également la plaque minéralogique de l'appelé 11 ou la voile de son bateau lorsque la référence choisie est le numéro d'immatriculation de voiture ou le numéro de voile. Il suffit alors généralement que l'appelé appose sur sa voiture ou sur son bateau un macaron affichant son adhésion au service. Est alors généralement également indiqué le numéro de téléphone permettant d'appeler le serveur 20.

Dans une étape 3 faisant partie d'un second stade d'établissement de la relation représenté sur la Fig. 3, l'appelant 10 prend connaissance de la référence diffusée sur le support d'information 20. Dans une étape 4 d'accès au serveur, l'appelant 10 appelle le serveur 30. Le serveur 30, par le biais de messages audio, informe l'appelant sur le coût du service puis lui demande de lui communiquer la référence par commande vocale ou commande DTMF. Si, dans le premier stade d'inscription, l'appelé a fixé des critères de filtrage nécessitant des informations sur l'appelant 11 auquel le serveur 30 n'a pas automatiquement accès, ce dernier va poser à l'appelant, par le biais de messages audio, les questions nécessaires, auxquelles l'appelant doit répondre par commandes vocales ou commandes DTMF.

Le serveur 30 gère automatiquement la demande de l'appelant. Eventuellement, il rejette l'appelant qui ne satisfait pas aux critères de filtrage. Eventuellement, il enregistre un message vocal déposé par l'appelant. Eventuellement, il enregistre une télécopie déposée par l'appelant.

Dans le cas où l'appelant souhaite une mise en liaison téléphonique et où sa demande n'est pas rejetée par le serveur 30, le procédé exécute une étape 5 d'identification d'appel au cours de laquelle le serveur 30 transmet à l'appelé des informations sur l'appelant. Par exemple, le serveur pourra transmettre à l'appelé le numéro de téléphone de l'appelant, le nom de l'appelant et d'autres informations préenregistrées et associées au sein du serveur au numéro de téléphone de l'appelant, voire un mini-message audio de l'appelant enregistré à la requête du serveur. Dans une étape 6 d'autorisation, l'appelé 11, par le biais de commandes vocales ou DTMF, autorise ou non le serveur 30 à effectuer une mise en relation téléphonique.

Dans une étape 7 de mise en relation, le serveur 30 met en relation l'appelant 10 et l'appelé 11 en se fondant sur le numéro de téléphone mémorisé dans la table 31 correspondant à la référence introduite par l'appelant 10. Cette mise en relation peut être directe téléphoniquement. Cette mise en relation peut également consister à permettre à l'appelant d'enregistrer une télécopie qui sera transmise par ledit serveur audit appelé en se fondant sur ledit ou un numéro de téléphone qui est associé à ladite référence. Il peut également s'agir de l'enregistrement d'un message audio qui sera transmis par ledit serveur audit appelé en se fondant sur ledit ou un numéro de téléphone qui est associé à ladite référence.

Dans un exemple de réalisation, le serveur 30 émet à l'appelant un message pour lui laisser le choix entre une mise en relation téléphonique directe avec l'appelé, l'enregistrement d'une télécopie qui sera ultérieurement transmise par ledit serveur à l'appelé et l'enregistrement d'un message audio qui sera transmis par ledit serveur à l'appelé.

Lorsque l'appelé 11 souhaite modifier ou mettre fin à la possibilité de connexion offerte par le service fondé sur le serveur 30 et géré par le procédé selon la présente invention, il entre en contact avec le serveur qui peut s'assurer de l'identité de la personne source de l'appel par divers moyens, par exemple à l'aide de l'identification automatique de l'installation de télécommunication source de l'appel, en demandant à la personne source de l'appel d'entrer le code personnel enregistré dans le stade d'inscription ou en demandant à la personne source de l'appel d'entrer son numéro de ligne. Le serveur 30 propose à l'appelé 11, par le biais de messages audio, plusieurs options dont la modification des paramètres du service et l'interruption de ce dernier.

Parmi les options proposées par le serveur 30, il existe une option de mise en relation en mode différé dans laquelle le serveur n'effectue pas de mise en relation téléphonique directe mais se contente d'enregistrer un message de l'appelant 10. Il prévient l'appelé 11 de la présence du message, l'appelé pouvant alors consulter ses messages quand bon lui semble et éventuellement rappeler l'appelant 10.

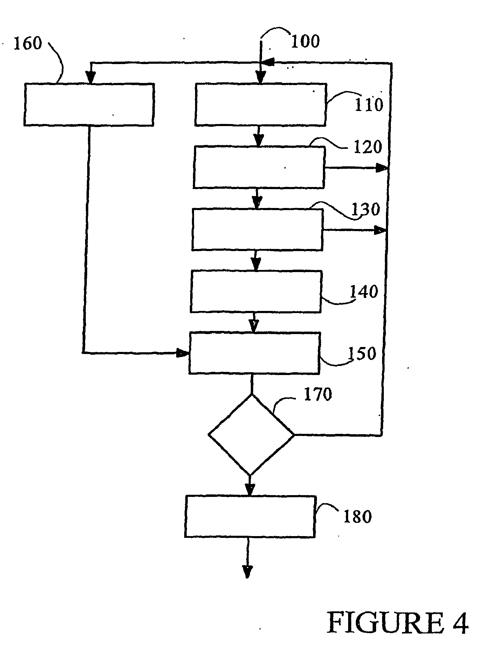

A la Fig. 4, on a représenté un schéma synoptique de l'opération d'enregistrement d'une référence vocale. En 100, l'appelé 11, à la demande du serveur 30 par exemple sous la forme d'un message approprié, délivre sa référence vocale au serveur 30. En 110, la référence vocale qui a été prononcée par l'appelé 11 en 100 est décomposée en une suite de phonèmes reconnus par le serveur 30 au moyen d'une base de données des phonèmes qu'il comporte. En 120, les phonèmes issus de cette suite sont mis bout à bout puis recomposés, par synthèse vocale, en signaux sonores qui sont alors diffusés à l'appelé 11 pour validation de la décomposition. S'il ne valide pas, alors il lui est demandé de reprononcer, en 100, une autre référence vocale. Cette validation de la décomposition est par exemple effectuée par un appui sur une touche du clavier de son poste téléphonique ou par une commande vocale appropriée.

En 130, le serveur 30 compare la suite de phonèmes qui a été validée par l'appelé 11 en 120 avec toutes les suites de phonèmes qui sont stockées dans une base de données pour vérifier que la suite de phonèmes validée est assez différente des suites existantes. Si tel est le cas, le modèle de reconnaissance de parole que stocke le serveur 30 est modifié en 140 pour incorporer l'élément de modèle qui résulte de la suite de phonèmes validée.

Dans la présente description, on appelle un élément de modèle une donnée qui caractérise complètement le signal acoustique résultant d'une suite de phonèmes. De même, un modèle de reconnaissance de parole est un modèle qui permet, à partir d'un signal vocal, la reconnaissance de ce signal vocal et sa transcription en une étiquette représentative de la suite de phonèmes correspondante.

En 150, le serveur 30 effectue un contrôle de sa capacité à reconnaître, au moyen du modèle de reconnaissance de parole stocké en 140, la référence vocale que l'appelé 11 a prononcée en 100 et que le serveur 30 a enregistrée en 160. Le modèle de reconnaissance de parole stocké en 140 reconnaît à partir de la référence vocale stockée en 160 une des références vocales existantes dans le serveur. Cette référence vocale est alors diffusée à l'appelé 11 qui, en 170, validera l'exactitude de la reconnaissance. Cette opération de diffusion et validation peut être précédée de la diffusion d'un message audio ou annonce d'accueil destinée aux appelants avant l'attente de la référence vocale.

Si validation de la reconnaissance il n'y a pas, par un message approprié, le serveur 30 demande à l'appelé de reprononcer en 100 une nouvelle référence vocale.

Si validation de la reconnaissance il y a, le modèle de reconnaissance de parole est alors définitivement remis à jour en 180. De plus, la suite de phonèmes est associée de façon univoque par le serveur 30 à une étiquette qui est alors enregistrée dans une base de données en relation avec au moins un numéro de téléphone auquel ledit appelé peut être appelé.

La référence vocale que l'appelant 10 a prononcée après avoir accédé au serveur 30 est traitée, par le serveur 30, au moyen du modèle de reconnaissance de parole et est alors reconnue. Il résulte de cette opération de reconnaissance la sélection d'une étiquette d'une suite de phonèmes à laquelle le serveur 30 fait correspondre le ou les numéros de téléphone associés pour la mise en relation de l'appelant 10 et de l'appelé 11.

On notera que le serveur 30 peut proposer à l'appelant, par exemple vocalement, au lieu de le mettre directement en relation avec l'appelé 11 ou préalablement à cette mise en relation, de simplement écouter un message audio que l'appelé 11 aurait enregistré à cet effet. Il peut également proposer d'enregistrer un message audio qui sera diffusé à l'appelé quand celui-ci le demandera. De même, l'appelant peut enregistrer une photocopie qui sera remise à l'appelé quand celui-ci le demandera.

## Revendications

1. Procédé de gestion de mise en relation téléphonique entre un appelé (11) auquel est associé un numéro de téléphone et un appelant (10) qui ne connaît pas ledit numéro de téléphone, ledit procédé comprend, dans un premier stade préalable, une étape (1) d'enregistrement, auprès d'un serveur (30) accessible au moins par le réseau de communication public dudit numéro de téléphone et par ledit appelé (11), d'une référence associée, au sein dudit serveur (30), à au moins un numéro de téléphone auquel ledit appelé (11) peut être appelé, ladite référence étant imposée audit serveur (30) par ledit appelé (11) ainsi qu'une étape (2) de diffusion de ladite référence sur un support d'information accessible au public et, dans un second stade, une étape (4) d'accès par ledit appelant (10) audit serveur (30) auquel ledit appelant (10) donne ladite référence, puis une étape (7) de mise en relation par ledit serveur (30) dudit appelant (10) et dudit appelé (11).

2. Procédé de gestion de mise en relation téléphonique selon l'une quelconque des revendications précédentes, **caractérisé en ce qu'**une même référence est associée à plusieurs numéros de téléphone, ledit serveur (30) mettant en relation ledit appelant (10) ayant accédé audit serveur et ayant donné ladite référence et ledit appelé (11) en se fondant sur un desdits numéros de téléphone en fonction d'un paramètre extérieur.

3. Procédé de gestion de mise en relation téléphonique selon l'une quelconque des revendications précédentes, **caractérise en ce qu'**il comprend également, avant l'étape (7) de mise en relation, une étape (5) d'identification d'appels au cours de laquelle le serveur (30) transmet audit appelé (11) des informations sur ledit appelant (10) ayant accédé audit serveur puis ayant donné ladite référence et une étape (6) d'autorisation au cours de laquelle ledit appelé autorise ou non ledit serveur à effectuer ladite étape (7) de mise en relation.

4. Procédé de gestion de mise en relation téléphonique selon l'une quelconque des revendications précédentes, **caractérisé en ce qu'**il comprend en outre, avant l'étape (7) de mise en relation, une étape (4) de filtrage d'appels au cours de laquelle ledit serveur (30) obtient des informations sur ledit appelant (10) ayant accédé audit serveur et ayant donné ladite référence et autorise ou non l'exécution de ladite étape (7) de mise en relation en fonction desdites informations et/ou de paramètres préalablement fixés par ledit appelé (11).

5. Procédé de gestion de mise en relation téléphonique selon l'une quelconque des revendications précédentes, **caractérisé en ce qu'**il comprend également une étape (4) d'enregistrement de messages audio au cours de laquelle ledit appelant (10) peut enregistrer un message audio qui sera ultérieurement transmis par ledit serveur (30) audit appelant (10).

6. Procédé de gestion de mise en relation téléphonique selon l'une quelconque des revendications précédentes, **caractérisé en ce qu'**il comprend également une étape (1) d'enregistrement d'un message audio par ledit appelé (11), ledit message étant destiné à être diffusé ultérieurement par ledit serveur (30) audit appelant (10) avant l'étape (7) de mise en relation.

7. Procédé de gestion de mise en relation téléphonique selon l'une quelconque des revendications précédentes, **caractérisé en ce que** ladite étape (7) de mise en relation consiste à mettre ledit appelant (10) en relation téléphonique avec l'appelé (11) en se fondant sur ledit ou un numéro du téléphone qui est associé à ladite référence.

8. Procédé de gestion de mise en relation téléphonique selon l'une quelconque des revendications précédentes, **caractérisé en ce que** ladite étape (7) de mise en relation consiste à permettre à l'appelant (10) d'enregistrer une télécopie qui sera transmise par ledit serveur (30) audit appelé (11) en se fondant sur ledit ou un numéro de téléphone qui est associé à ladite référence.

9. Procédé de gestion de mise en relation téléphonique selon l'une quelconque des revendications précédentes, **caractérisé en ce que** ladite étape (7) de mise en relation consiste à permettre à l'appelant (10) d'enregistrer un message audio qui sera transmis par ledit serveur (30) audit appelé (11) en se fondant sur ledit ou un numéro de téléphone qui est associé à ladite référence.

10. Procédé de gestion de mise en relation téléphonique selon l'une quelconque des revendications précédentes, **caractérisé en ce que** ladite étape (7) de mise en relation consiste à émettre un message pour laisser le choix audit appelant (10) entre la mise en relation téléphonique avec l'appelé (11), l'enregistrement dune télécopie qui sera ultérieurement transmise par ledit serveur (30) audit appelé (11) et l'enregistrement d'un message audio qui sera transmis par ledit serveur (30) audit appelé (11).

11. Procédé de gestion de mise en relation téléphonique selon l'une quelconque des revendications précédentes, **caractérisé en ce que** ladite référence est une référence vocale associée ou non à une référence numérique ou alphanumérique.

12. Procédé de gestion de mise en relation téléphonique selon la revendication 11, **caractérisé en ce que**, dans le premier stade préalable, ledit appelé (11) enregistre (100) ladite référence vocale associée ou non à ladite référence numérique ou alphanumérique, **en ce que** ladite référence vocale est ensuite traitée (110, 120, 130, 140, 150, 160, 170, 180) pour, d'une part, modifier le modèle de reconnaissance de parole dudit serveur (30) et pour, d'autre part, enregistrer, en relation avec le ou les numéros de téléphone auxquels peut être joint l'appelé (11), une étiquette résultat de la reconnaissance de ladite référence vocale par le modèle de reconnaissance de parole dudit serveur, et **en ce que** dans le second stade, la référence vocale que l'appelant (10) a prononcée après avoir accédé au serveur (30) est traitée au moyen du modèle de reconnaissance de parole dudit serveur pour y être reconnue d'où il résulte une étiquette à laquelle le serveur (30) fait correspondre le ou les numéros de téléphone associés pour la mise en relation de l'appelant (10) et de l'appelé (11).

13. Procédé de gestion de mise en relation téléphonique selon la revendication 12, **caractérisé en ce que** la référence vocale prononcée par l'appelé (11) est décomposée en une suite de phonèmes et est recomposée, par synthèse vocale, en signaux sonores qui sont alors diffusés à l'appelé (11) pour validation de ladite décomposition.

14. Procédé de gestion de mise en relation téléphonique selon la revendication 13, **caractérisé en ce que** la suite de phonèmes qui a été validée par l'appelé (11) est comparée aux suites de phonèmes stockées dans une base de données dudit serveur (30) pour vérifier que la suite de phonèmes validée est assez différente des suites existantes.

15. Procédé de gestion de mise en relation téléphonique selon la revendication 13 ou 14, **caractérisé en ce que** le modèle de reconnaissance de parole que stocke ledit serveur (30) est modifié pour incorporer l'élément de modèle qui résulte de la suite de phonèmes validée par l'appelé (11).

16. Procédé de gestion de mise en relation téléphonique selon une des revendications 13 à 15, **caractérisé en ce que** le serveur (30) effectue un contrôle de sa capacité à reconnaître, au moyen de son modèle de reconnaissance de parole, la référence vocale que l'appelé (11) a prononcée et que le serveur (30) avait enregistrée et, après diffusion et validation par l'appelé (11), d'une part, modifie définitivement son modèle de reconnaissance de parole et, d'autre part, enregistre une étiquette associée de façon univoque par le serveur 30 à la suite de phonèmes correspondant à ladite référence vocale.

17. Procédé de gestion de mise en relation téléphonique selon la revendication 16, **caractérisé en ce que** ladite opération de diffusion et validation est précédée de la diffusion d'un message audio ou annonce d'accueil destinée aux appelants avant l'attente de la référence vocale.

18. Système pour exécuter un procédé de gestion de mise en relation téléphonique selon l'une quelconque des revendications précédentes, le système comprenant un serveur (30) adapté à emmagasiner, dans une première table (31) de base de données relationnelle, des numéros de téléphone qu'il peut utiliser pour effectuer une mise en relation téléphonique et, dans une seconde table (32) de base de données relationnelle, des références, ledit serveur étant muni d'un moyen d'interface apte à recevoir au moins une telle référence en provenance d'au moins un utilisateur destiné à être appelé, des liens (40) étant établis entre chaque référence et un ou plusieurs numéros de téléphone correspondants.

19. Système selon la revendication 18, **caractérisé en ce que** ledit moyen d'interface est adapté à interpréter des commandes vocales.

## Claims

1. Method of managing telephone connection between a called party (11) with whom a telephone number is associated and a caller (10) who does not know said telephone number, said method comprises, in a first prior stage, a step (1) of registering, with a server (30) accessible at least through the public switching network of said telephone number and by said called party (11), of a reference associated, within said server (30), with at least one telephone number on which said called party (11) can be called, said reference being imposed on said server (30) by said called party (11) as well as a step (2) of disseminating said reference on an information medium accessible to the public and, in a second stage, a step (4) of access by said caller (10) to said server (30) to which said caller (10) gives said reference, then a step (7) of connection by said server (30) of said caller (10) and of said called party (11).

2. Method of managing telephone connection according to Claim 1, **characterized in that** one and the same reference is associated with several telephone numbers, said server (30) connecting said caller (10) having accessed said server and having given said reference and said called party (11) on the basis of one of said telephone numbers as a function of an outside parameter.

3. Method of managing telephone connection according to any one of the preceding claims, **characterized in that** it also comprises, before the connection step (7), a step (5) of identifying calls in the course of which step the server (30) transmits to said called party (11) information about said caller (10) having accessed said server then having given said reference and a step (6) of authorization in the course of which said called party authorizes or otherwise said server to perform said connection step (7).

4. Method of managing telephone connection according to any one of the preceding claims, **characterized in that** it furthermore comprises, before the connection step (7), a step (4) of filtering calls in the course of which step said server (30) obtains information about said caller (10) having accessed said server and having given said reference and authorizes or otherwise the execution of said connection step (7) as a function of said information and/or of parameters previously fixed by said called party (11).

5. Method of managing telephone connection according to any one of the preceding claims, **characterized in that** it also comprises a step (4) of recording audio messages in the course of which step said caller (10) can record an audio message which will subsequently be transmitted by said server (30) to said caller (10).

6. Method of managing telephone connection according to any one of the preceding claims, **characterized in that** it also comprises a step (1) of recording an audio message by said called party (11), said message being intended to be disseminated subsequently by said server (30) to said caller (10) before the connection step (7).

7. Method of managing telephone connection according to any one of the preceding claims, **characterized in that** said connection step (7) consists in connecting said caller (10) by telephone with the called party (11) on the basis of said or a telephone number which is associated with said reference.

8. Method of managing telephone connection according to any one of the preceding claims, **characterized in that** said connection step (7) consists in allowing the caller (10) to record a fax which will be transmitted by said server (30) to said called party (11) on the basis of said or a telephone number which is associated with said reference.

9. Method of managing telephone connection according to any one of the preceding claims, **characterized in that** said connection step (7) consists in allowing the caller (10) to record an audio message which will be transmitted by said server (30) to said called party (11) on the basis of said or a telephone number which is associated with said reference.

10. Method of managing telephone connection according to any one of the preceding claims, **characterized in that** said connection step (7) consists in sending a message so as to let said caller (10) choose between telephone connection with the called party (11), the recording of a fax which will subsequently be transmitted by said server (30) to said called party (11) and the recording of an audio message which will be transmitted by said server (30) to said called party (11).

11. Method of managing telephone connection according to any one of the preceding claims, **characterized in that** said reference is a voice reference associated or not with a numerical or alphanumeric reference.

12. Method of managing telephone connection according to Claim 11, **characterized in that** in the first prior stage, said called party (11) records (100) said voice reference associated or not with said numerical or alphanumeric reference, **in that** said voice reference is thereafter processed (110, 120, 130, 140, 150, 160, 170, 180) so as, on the one hand, to modify the speech recognition model of said server (30) and so as, on the other hand, to register, in connection with the telephone number or numbers on which the called party (11) can be reached, a label resulting from the recognition of said voice reference by the speech recognition model of said server, and **in that** in the second stage, the voice reference that the caller (10) has spoken after having accessed the server (30) is processed by means of the speech recognition model of said server so as to be recognized there, from which there results a label with which the server (30) matches the associated telephone number or numbers for connection of the caller (10) and of the called party (11).

13. Method of managing telephone connection according to Claim 12, **characterized in that** the voice reference spoken by the called party (11) is decomposed into a string of phonemes and is recomposed, by voice synthesis, into sound signals which are then disseminated to the called party (11) for validation of said decomposition.

14. Method of managing telephone connection according to Claim 13, **characterized in that** the string of phonemes which has been validated by the called party (11) is compared with the strings of phonemes stored in a database of said server (30) so as to verify that the validated string of phonemes is fairly different from the existing strings.

15. Method of managing telephone connection according to Claim 13 or 14, **characterized in that** the speech recognition model stored by said server (30) is modified so as to incorporate the model element which results from the string of phonemes validated by the called party (11).

16. Method of managing telephone connection according to one of Claims 13 to 15, **characterized in that** the server (30) performs a check of its capacity to recognize, by means of its speech recognition model, the voice reference that the called party (11) has spoken and that the server (30) had recorded and, after dissemination and validation by the called party (11), on the one hand, definitively modifies its speech recognition model and, on the other hand, records a label associated in a one-to-one manner by the server (30) with the string of phonemes corresponding to said voice reference.

17. Method of managing telephone connection according to Claim 16, **characterized in that** said operation of dissemination and validation is preceded by the dissemination of an audio message or greeting intended for callers before the wait for the voice reference.

18. System for executing a method of managing telephone connection according to any one of the preceding claims, the system comprising a server (30) suitable for stashing, in a first table (31) of a relational database, telephone numbers that it can use to perform a telephone connection and, in a second table (32) of a relational database, references, said server being furnished with an interface means able to receive at least one such reference originating from at least one user intended to be called, links (40) being established between each reference and one or more corresponding telephone numbers.

19. System according to Claim 18, **characterized in that** said interface means is suitable for interpreting voice commands.

## Patentansprüche

1. Verfahren zur Verwaltung des Aufbaus einer Telefonverbindung zwischen einem Angerufenen (11), dem eine Telefonnummer zugeordnet ist, und einem Anrufer (10), der die Telefonnummer nicht kennt, wobei das Verfahren in einem ersten vorhergehenden Stadium einen Schritt (1) des Einspeicherns in einen Server (30), der für mindestens das öffentliche Kommunikationsnetz der Telefonnummer und für den Angerufenen (11) zugänglich ist, einer Referenz, die innerhalb des Servers (30) mindestens einer Telefonnummer zugeordnet ist, unter der der Angerufene (11) angerufen werden kann, wobei die Referenz dem Server (30) vom Angerufenen (11) vorgeschrieben wird, sowie einen Schritt (2) des Sendens der Referenz auf einen für die Öffentlichkeit zugänglichen Informationsträger, und in einem zweiten Stadium einen Schritt (4) des Zugriffs durch den Anrufenden (10) auf den Server (30), dem der Anrufende (10) die Referenz angibt, und dann einen Schritt (7) der Verbindung des Anrufenden (10) mit dem Angerufenen (11) durch den Server (30) aufweist.

2. Verfahren zur Verwaltung des Aufbaus einer Telefonverbindung nach Anspruch 1, **dadurch gekennzeichnet, dass** die gleiche Referenz mehreren Telefonnummern zugeordnet wird, wobei der Server (30) den Anrufenden (10), der auf den Server zugegriffen und die Referenz angegeben hat, und den Angerufenen (11) verbindet, indem er sich in Abhängigkeit von einem externen Parameter auf eine der Telefonnummern stützt.

3. Verfahren zur Verwaltung des Aufbaus einer Telefonverbindung nach einem der vorhergehenden Ansprüche, **dadurch gekennzeichnet, dass** es ebenfalls vor dem Schritt (7) des Verbindungsaufbaus einen Schritt (5) der Identifizierung von Anrufen, während dem der Server (30) an den Angerufenen (11) Informationen über den Anrufer (10) überträgt, der auf den Server zugegriffen und dann die Referenz angegeben hat, und einen Schritt (6) der Genehmigung aufweist, während dem der Angerufene den Server berechtigt oder nicht, den Schritt (7) des Verbindungsaufbaus durchzuführen.

4. Verfahren zur Verwaltung des Aufbaus einer Telefonverbindung nach einem der vorhergehenden Ansprüche, **dadurch gekennzeichnet, dass** es außerdem vor dem Schritt (7) des Verbindungsaufbaus einen Schritt (4) der Filterung von Anrufen aufweist, während dem der Server (30) Informationen über den Anrufer (10) erhält, der auf den Server zugegriffen und die Referenz angegeben hat, und die Durchführung des Schritts (7) des Verbindungsaufbaus in Abhängigkeit von den Informationen und/oder von Parametern genehmigt oder nicht, die vorher vom Angerufenen (11) festgelegt wurden.

5. Verfahren zur Verwaltung des Aufbaus einer Telefonverbindung nach einem der vorhergehenden Ansprüche, **dadurch gekennzeichnet, dass** es ebenfalls einen Schritt (4) des Aufzeichnens von Audiomitteilungen aufweist, während dem der Anrufer (10) eine Audiomitteilung aufzeichnen kann, die später vom Server (30) an den Anrufer (10) übertragen wird.

6. Verfahren zur Verwaltung des Aufbaus einer Telefonverbindung nach einem der vorhergehenden Ansprüche, **dadurch gekennzeichnet, dass** es ebenfalls einen Schritt (1) der Aufzeichnung einer Audiomitteilung durch den Angerufenen (11) aufweist, wobei die Mitteilung dazu bestimmt ist, später vor dem Schritt (7) des Verbindungsaufbaus vom Server (30) an den Anrufer (10) gesendet zu werden.

7. Verfahren zur Verwaltung des Aufbaus einer Telefonverbindung nach einem der vorhergehenden Ansprüche, **dadurch gekennzeichnet, dass** der Schritt (7) des Verbindungsaufbaus darin besteht, unter Verwendung der oder einer Telefonnummer, die der Referenz zugeordnet ist, den Anrufer (10) mit dem Angerufenen (11) telefonisch zu verbinden.

8. Verfahren zur Verwaltung des Aufbaus einer Telefonverbindung nach einem der vorhergehenden Ansprüche, **dadurch gekennzeichnet, dass** der Schritt (7) des Verbindungsaufbaus darin besteht, es dem Anrufer (10) zu erlauben, ein Fax aufzuzeichnen, das vom Server (30) unter Verwendung der oder einer Telefonnummer an den Angerufenen (11) übertragen wird, die der Referenz zugeordnet ist.

9. Verfahren zur Verwaltung des Aufbaus einer Telefonverbindung nach einem der vorhergehenden Ansprüche, **dadurch gekennzeichnet, dass** der Schritt (7) des Verbindungsaufbaus darin besteht, es dem Anrufer (10) zu erlauben, eine Audiomitteilung aufzuzeichnen, die vom Server (30) an den Angerufenen (11) unter Verwendung der oder einer Telefonnummer übertragen wird, die der Referenz zugeordnet ist.

10. Verfahren zur Verwaltung des Aufbaus einer Telefonverbindung nach einem der vorhergehenden Ansprüche, **dadurch gekennzeichnet, dass** der Schritt (7) des Verbindungsaufbaus darin besteht, eine Mitteilung zu senden, um dem Anrufer (10) die Wahl zwischen dem Aufbau einer Telefonverbindung mit dem Angerufenen (11), der Aufzeichnung eines Faxes, das später vom Server (30) an den Angerufenen (11) übertragen wird, und der Aufzeichnung einer Audiomitteilung zu lassen, die vom Server (30) an den Angerufenen (11) übertragen werden wird.

11. Verfahren zur Verwaltung des Aufbaus einer Telefonverbindung nach einem der vorhergehenden Ansprüche, **dadurch gekennzeichnet, dass** die Referenz eine Sprachreferenz ist, die einer digitalen oder alphanumerischen Referenz zugeordnet ist oder nicht.

12. Verfahren zur Verwaltung des Aufbaus einer Telefonverbindung nach Anspruch 11, **dadurch gekennzeichnet, dass** im ersten vorhergehenden Stadium der Angerufene (11) die Sprachreferenz, die der digitalen oder alphanumerischen Referenz zugeordnet ist oder nicht, aufzeichnet (100), dass die Sprachreferenz anschließend verarbeitet wird (110, 120, 130, 140, 150, 160, 170, 180), um einerseits das Spracherkennungsmodell des Servers (30) zu verändern, und um andererseits in Verbindung mit der oder den Telefonnummer(n), mit denen der Angerufene (11) verbunden werden kann, einen Kennsatz aufzuzeichnen, der das Ergebnis der Erkennung der Sprachreferenz durch das Spracherkennungsmodell des Servers ist, und dass im zweiten Stadium die Sprachreferenz, die der Anrufer (10) ausgesprochen hat, nachdem er auf den Server (30) zugegriffen hat, mittels des Spracherkennungsmodells des Servers verarbeitet wird, um dort erkannt zu werden, woraus ein Kennsatz resultiert, dem der Server (30) die zugeordnete(n) Telefonnummer(n) für den Verbindungsaufbau zwischen dem Anrufer (10) und dem Angerufenen (11) zuordnet.

13. Verfahren zur Verwaltung des Aufbaus einer Telefonverbindung nach Anspruch 12, **dadurch gekennzeichnet, dass** die vom Angerufenen (11) ausgesprochene Sprachreferenz in eine Folge von Phonemen zerlegt und durch Sprachsynthese in Tonsignalen wieder zusammengesetzt wird, die dann zur Validierung der Zerlegung an den Angerufenen (11) gesendet werden.

14. Verfahren zur Verwaltung des Aufbaus einer Telefonverbindung nach Anspruch 13, **dadurch gekennzeichnet, dass** die Folge von Phonemen, die vom Angerufenen (11) validiert wurde, mit den Folgen von Phonemen verglichen wird, die in einer Datenbasis des Servers (30) gespeichert sind, um zu überprüfen, ob die validiert Folge von Phonemen sich ausreichend von den existierenden Folgen unterscheidet.

15. Verfahren zur Verwaltung des Aufbaus einer Telefonverbindung nach Anspruch 13 oder 14, **dadurch gekennzeichnet, dass** das im Server (30) gespeicherte Spracherkennungsmodell verändert wird, um das Modellelement aufzunehmen, das sich aus der Folge von vom Angerufenen (11) validierten Phonemen ergibt.

16. Verfahren zur Verwaltung des Aufbaus einer Telefonverbindung nach einem der Ansprüche 13 bis 15, **dadurch gekennzeichnet, dass** der Server (30) eine Kontrolle seiner Fähigkeit durchführt, mittels seines Spracherkennungsmodells die Sprachreferenz zu erkennen, die der Angerufene (11) ausgesprochen und der Server (30) gespeichert hatte, und nach Aussendung und Validierung durch den Angerufenen (11) einerseits sein Spracherkennungsmodell definitiv ändert und andererseits einen Kennsatz aufzeichnet, der eindeutig vom Server (30) der Folge von Phonemen zugeordnet wird, die der Sprachreferenz entsprechen.

17. Verfahren zur Verwaltung des Aufbaus einer Telefonverbindung nach Anspruch 16, **dadurch gekennzeichnet, dass** vor dem Vorgang der Aussendung und Validierung das Aussenden einer Audiomitteilung oder Empfangsanzeige liegt, die für die Anrufer vor der Erwartung der Sprachreferenz bestimmt ist.

18. System zur Durchführung eines Verfahrens zur Verwaltung des Aufbaus einer Telefonverbindung nach einem der vorhergehenden Ansprüche, wobei das System einen Server (30) aufweist, der ausgelegt ist, um in einer ersten Tabelle (31) einer Verbindungsdatenbasis Telefonnummern zu speichern, die er verwenden kann, um den Aufbau einer Telefonverbindung durchzuführen, und um in einer zweiten Tabelle (32) einer Verbindungsdatenbasis Referenzen zu speichern, wobei der Server mit einem Schnittstellenmittel versehen ist, das ausgelegt ist, um mindestens eine solche Referenz von mindestens einem Benutzer zu empfangen, der dazu bestimmt ist, angerufen zu werden, wobei Links (40) zwischen jeder Referenz und einer oder mehreren entsprechenden Telefonnummern aufgebaut werden.

19. System nach Anspruch 18, **dadurch gekennzeichnet, dass** das Schnittstellenmittel ausgelegt ist, um Sprachbefehle zu interpretieren.
